# EUROPEAN PATENT SPECIFICATION

(11) **EP 2 009 873 B1**
(45) Date of publication and mention of the grant of the patent: **26.12.2018**
(21) Application number: 07111265.0
(22) Date of filing: 28.06.2007
(51) Int. Cl.: H04L 29/08

(54) **System and method for transferring data to a portable electronic device**
System und Verfahren zur Übertragung von Daten auf ein tragbares elektronisches Gerät
Système et procédé pour le transfert de données vers un dispositif électronique portable

(43) Date of publication of application: 31.12.2008
(73) Proprietor: BlackBerry Limited, Waterloo, ON N2K 0A7 (CA)
(72) Inventor: Martin, Daryl Joseph, Paradise, Newfoundland & Labrador A1L 2Y6 (CA); Wilson, Sean J. F., Waterloo,2Ontario N2K 4A6 (CA); O'Keefe, Christopher, St John's, Newfoundland & Labrador A1B 4H3 (CA)
(74) Representative: MERH-IP Matias Erny Reichl Hoffmann Patentanwälte PartG mbB

(56) References cited:
- EP-A2- 1 164 765
- WO-A-02/069585
- JILLES VAN GURP ET AL: "Mobile Service Oriented Architectures (MOSOA)" DISTRIBUTED APPLICATIONS AND INTEROPERABLE SYSTEMS LECTURE NOTES IN COMPUTER SCIENCE;;LNCS, SPRINGER-VERLAG, BE, vol. 4025, 2006, pages 1-15, XP019036790 ISBN: 3-540-35126-4
- WEBER M ET AL: "Mobile entertainment using personal avatars" TELECOMMUNICATIONS, 2005. CONTEL 2005. PROCEEDINGS OF THE 8TH INTERNATIONAL CONFERENCE ON ZAGREB, CROATIA JUNE 15-17, 2005, PISCATAWAY, NJ, USA,IEEE, 15 June 2005 (2005-06-15), pages 341-346, XP010810346 ISBN: 953-184-081-4
- DAMIANOS L E; CUOMO D; GRIFFITH J; HIRST D M; SMALLWOOD J: "Exploring the Adoption, Utility, and Social Influences of Social Bookmarking in a Corporate Environment", PROCEEDINGS OF THE 40TH HAWAII INTERNATIONAL CONFERENCE ON SYSTEM SCIENCES, JANUARY 3-6, 2007, IEEE COMPUT. SOC, January 2007 (2007-01), pages 1-10, Los Alamitos, CA, USA

## Description

The present application relates generally to data transfer to portable electronic devices.

Portable electronic devices are widely used and can provide a variety of functions using various applications such as calendar, address book, messaging, Web browser, mapping and other applications. Portable electronic devices can include several types of devices such as simple cellular telephones, smart telephones, and wireless PDAs. These devices run on a wide variety of networks from data-only networks such as Mobitex and DataTAC to complex voice and data networks such as GSM/GPRS, CDMA, EDGE, UMTS and CDMA2000 networks.

A wide variety of data is associated with the various applications on the portable electronic devices. For example, a portable electronic device includes data for each contact in the address book, addresses for each location for a mapping application and bookmarks for each address in the Web browser. To add this information, the user either enters the information by typing directly into the portable electronic device or by typing into a computer that includes software for synchronizing with the portable electronic device. When such information is found on a computer that does not include software for synchronizing with the portable electronic device, such as a public computer terminal, the information is not easily transferred to the portable electronic device. For example, a Web site address that is accessed at a public computer terminal must be typed on the portable electronic device for storage.

Thus, there is no easy method of transferring data to the portable electronic device. Improvements in transfer of data are therefore desirable.

Relevant background information includes "Mobile Service Oriented Architectures (MOSOA)"; Jilles Van Gurp et al.; Distributed Applications and Interoperable Systems Lecture Notes in Computer Science; LNCS, Springer-Verlag, BE, vol. 4025, 2006, pages 1-15, XP019036790 ISBN: 3-540-35126-4. This document discloses a web service that allows an individual to purchase movie tickets for himself and a group of his friends. Upon completion of the purchase, the web service notifies the purchaser's friends of the purchase.

WO-A-02/069585 discloses a method to filter incoming mobile device messages by giving the user of the mobile device the discretion to determine whether the data, which are to be sent to the device, should be sent to the device.

There is also disclosed a method to distribute images to a list of recipients in : "Mobile entertainment using personal avatars"; Weber M. et al.; Telecommunications, 2005, Contel 2005, Proceedings of the 8th International Conference on Zagreb, Croatia June 15-17, 2005, Piscataway, NJ, USA, IEEE, 15 June 2005 (2005-06-15), pages 341-346, XP010810346 ISBN: 953-184-081-4. A website allows the user to create the image that is to be saved on a server. A link to the image is emailed to a list of recipients. The recipients may click on the link to view the image.

L. E. Damianos, et. al. "Exploring the Adoption, Utility, and Social Influences of Social Bookmarking in a Corporate Environment" shows social bookmarking. Social bookmarks are stored in a central repository. The bookmarks can be annoted with user-specified metadata and can be tagged. Users can further pivot browse on any tag to show all bookmarks tagged with a keyword.

EP 1164765 A2 shows a transmission of URLs or content corresponding to URLs from a WAP/i-mode-enabled mobile device to any other device across a network. A URL corresponding to content accessed by WAP/i-mode-enabled mobile device is transmitted to an application server. The WAP/i-mode-enabled mobile device further transmits a destination address for the content to the application server. The application server then transmits the URL corresponding to the content to the destination address. The URL can then be used to render the corresponding content at the destination address.

### GENERAL

According to one aspect there is provided a server method of transferring data to a portable electronic device, as recited in claim 1.

According to another aspect, there is provided a system for transferring data to a portable electronic device, comprising at least one system server and first and second computers connected to a network, as recited in claim 11.

According to another aspect, there is provided a computer program product for controlling a system server, comprising a computer-readable medium having computer-readable code embodied therein, as recited in claim 12.

Thus, data can be pushed from any Web site accessed by a computer to a portable electronic device. The data, such as contact information, a memo, calendar data, map locations and bookmarks can be pushed from a computer to the portable electronic device rather than manual typing of such information into the portable electronic device and the data is automatically associated with the respective application and stored in the appropriate database for viewing when using the associated application. A method may therefore be provided for transfer of information from a computer that is not normally synchronized with the portable electronic device.

In a particular aspect, a first server may receive a request to push the data to a particular mobile device. The data may be identified in the request using a unique identification. The data may be stored in association with the unique identification in a data store connected to a second server. When the push request is determined at the first server, the second server may be used to obtain the data by matching the unique identification received with the request to the data stored in association with the unique identification. The data may then be formatted for the portable electronic device and is transmitted to the portable electronic device.

To place a link on a Web site for pushing data to a portable electronic device, a request for a push link may be made to a system server from any other computer via the Internet and the requestor uses a login and, for example, a password for identification authentication. The requestor may then be prompted for the data for storage in the data store and the data is assigned a unique identification. A hypertext transfer protocol (http) link may be returned including the unique identification for addition to the Web site.

In the above aspects, data is only provided from authorized sources as the creation of the http link requires an identification and authentication of the requestor. Further, the data is verified by controlling the protocol and formatting the data prior to transfer to the portable electronic device, thereby providing a level of security.

### BRIEF DESCRIPTION OF THE DRAWINGS

The system and method for transferring data to a portable electronic device will be better understood with reference to the following description and to the Figures, in
which:
Figure 1 is a functional block diagram of a radio communication system for transferring data to a portable electronic device in accordance with one embodiment;
Figure 2 is a block diagram showing components of a portable electronic device;
Figure 3 is simplified flowchart showing steps in a method of transferring data to a portable electronic device in accordance with an embodiment; and
Figure 4 is simplified flowchart showing further steps in a method of transferring data to a portable electronic device in accordance with an embodiment.

### DESCRIPTION OF PREFERRED EMBODIMENTS

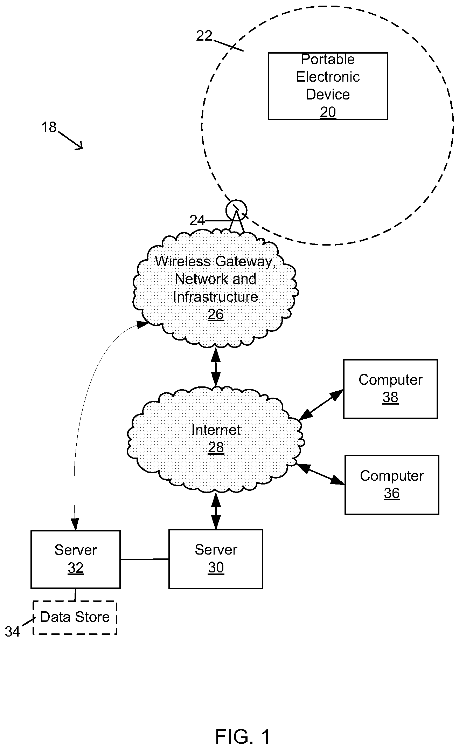

Reference is first made to Figure 1 which shows a functional block diagram of a radio communication system indicated generally by the numeral 18 and a portable electronic device 20. The radio communication system 18 (referred to herein as the communication system 18) provides for communications with portable electronic devices including the exemplary portable electronic device 20, as shown. The portable electronic device 20 and the communication system 18 are operable to effect over-the-air communications therebetween via a radio communications channel. Data originating at the portable electronic device 20 is communicated to the communication system 18 by way of the radio communications channel. Similarly, data originating at the radio communication system 18 is communicated from the communication system 18 to the portable electronic device 20 by way of the radio communications channel, thereby providing data to the portable electronic device 20.

For the purposes of illustration, the communication system 18 is functionally represented in Figure 1 and a single base station 24 is shown. The base station 24 defines a coverage area, or cell 22 within which communications between the base station 24 and the portable electronic device 20 can be effectuated. It will be appreciated that the portable electronic device 20 is movable within the cell 22 and can be moved to coverage areas defined by other cells that are not illustrated in the present example. The communication system 18 includes a wireless gateway, network and infrastructure 26 that is connected to the Internet 28 for communication with a system server 30. The system server 30 is implemented, for example, on a network computer within the firewall of a corporation, and acts as the main interface for data sent to and from the portable electronic device 20. The system server 30 is connected to a second server, referred to as a data server 32 that is functionally coupled to a data store 34 for storage of data for transmission to portable electronic devices such as the exemplary portable electronic device 20 shown in Figure 1. As shown, the data server 32 is connected to the wireless gateway, network and infrastructure 26 for wireless transmission of data.

It will be appreciated that many computer systems are connected to the Internet including, for example, personal computers connected to the Internet via Internet Service Providers (ISPs), company computers connected to local area networks (LANs) that are connected to the Internet, Web servers that are responsible for accepting http requests from a Web browser and providing http responses along with data such as Web pages and links, and others. Only two such exemplary computers 36, 38 are shown connected to the Internet for the purpose of the present discussion.

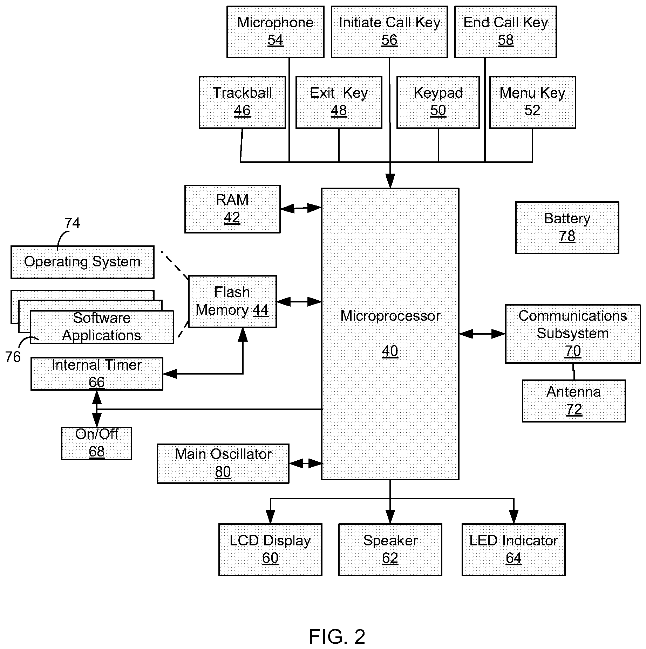

Referring now to Figure 2, there is shown a block diagram of the portable electronic device 20. The portable electronic device 20 is based on the computing environment and functionality of a hand-held wireless communication device. The portable electronic device 20 is based on a microcomputer that includes a microprocessor 40 (also referred to as a processor) connected to a random access memory unit (RAM) 42 and a persistent storage device 44 that is responsible for various non-volatile storage functions of the portable electronic device 20. Operating system software executable by the microprocessor 40 is stored in the persistent storage device 44, which in the present embodiment is flash memory. It will be appreciated, however, that the operating system software can be stored in other types of memory such as read-only memory (ROM). The microprocessor 40 receives input from various input devices including, for example, a trackball or trackwheel 46, an exit key 48, a keypad 50, a menu key 52, a microphone 54, an initiate call key 56, and an end call key 58. The microprocessor 40 outputs to various output devices including the LCD display 60, the speaker 62 and the LED indicator 64. The microprocessor 40 also interacts with on/off circuitry 66 for powering up and powering down the portable electronic device 20, and an internal timer 68.

In the present embodiment, the portable electronic device 20 is a two-way RF communication device having voice and data communication capabilities. The portable electronic device 20 also includes Internet communication capabilities. Two-way RF communication is facilitated by a communications subsystem 70 that is used to connect to and operate with a complex voice and data network such as a GSM/GPRS, CDMA, EDGE, UMTS or CDMA2000 network, via the antenna 72.

As indicated above, the flash memory 44 stores the operating system software 74 and a plurality of software applications 76 executable by the microprocessor 40 that enable the portable electronic device 20 to perform certain operations including the communication operations referred to above. Applications software is provided including, for example, PIM applications such as an electronic mail (Messages) application, an Address Book application, a Tasks application, and a Calendar application, as well as other applications such as a Web Browser application. Data associated with each of the applications is stored in databases at the flash memory 44. Thus, contact data is stored in an address book database. Similarly, calendar data is stored in a calendar database.

In a data communication mode, a received signal such as a text message or Web page download is processed by the communications subsystem 70 and input to the microprocessor 40 for further processing of the received signal for output to the LCD display 60. A user of the portable electronic device 20 can also compose data items within a software application such as a message application using the keypad 50, for example, in conjunction with the trackball 46 and the LCD display 24. Such composed items can then be transmitted over a communications network through the communications subsystem 46 and antenna 48.

Although not shown, a short-range communications subsystem can also be provided for communication between the portable electronic device 20 and other devices or systems. Such short-range communications subsystems include, for example, an infrared device as well as associated components and circuitry, and a Bluetooth™ communication system.

A rechargeable battery 78 such as a Li-ion battery is provided for powering the portable electronic device 20.

The user can power down the portable electronic device 20 to a power-off or low-power state by pressing a power on/off button (not shown). Alternatively, the device can be powered up or powered down using a combination of buttons that activate the on/off circuitry 68. As indicated above, the portable electronic device 20 includes an internal timer 66 that can also deliver an interrupt on an interrupt line to power up the portable electronic device 20 when the portable electronic device 20 is in a power-down state and to power down the device when the portable electronic device 20 is in the power-up state. The internal timer 66 is responsible for keeping track of the date and time when the portable electronic device 20 is turned off. A main oscillator 80 is also provided for generating a relatively high-frequency (MHz) clock signal compared to that generated by the oscillator that is part of the internal timer 66 (tens of kHz). The main oscillator 80 includes circuitry that operates when the portable electronic device is on for providing a clock signal to the microprocessor 40 and other components.

Data including, for example email messages, is received on the electronic device 20 through the communication system 18 that wirelessly connects to the electronic device 20 via the communications subsystem 70 through the antenna 48.

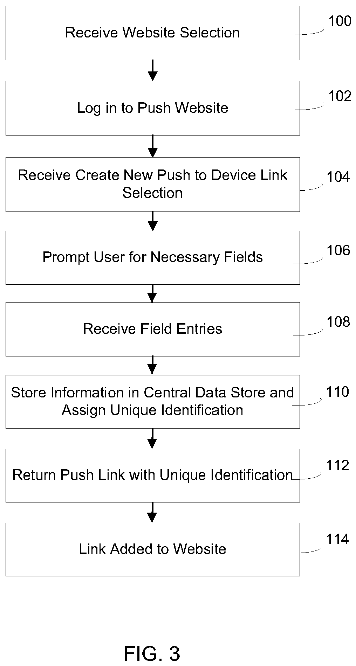

Reference is now made to Figure 3 to describe a method for transferring data to a portable electronic device. Coding of software for carrying out the steps illustrated in Figure 3 is well within the scope of a person of ordinary skill in the art. As shown in figure 3, the computer 36 is used to access a Web site hosted by the system server 30 at step 100. It will be appreciated that the system server is a computer that is responsible for http communication by accepting http requests via a Web browser and providing an http response. The user of the computer 36 therefore uses a Web browser to access a Web page. A login prompt is provided via the http response displayed using the Web browser on the computer 36 and the user enters login information such as a user name and password. The login information is received at the system server 30 and is matched to login information of authorized users. Thus, the user logs in to the Web site at step 102 for authentication of the user's identity prior to providing services as described below.

After logging in, an http response is sent from the system server 30 to the computer 36 along with a Web page including a link, selectable by the user, for creating a new link for pushing data to a portable electronic device, at step 104. The user is then prompted for the data to be pushed to the portable electronic device, by user entry of fields at step 106.

The user is prompted to select a type of data to be provided. For example, options for contact information for an address book, a bookmarked Web address for a browser, a location, such as the location of a local restaurant a task, a memo, a calendar event, a picture option, any additional suitable options and any combination of these options can be provided.

With the selection of one of the options, the user is prompted for data input relating to the selected option. Alternatively, a page is loaded to assist the user with entry of data based on the selected option. It will be appreciated that certain fields can be default fields requiring data entry by the user. For example, at least one field must be populated for a memo.

The user enters the data through the Web browser and the data is sent to the system server 30 where it is received at step 108. It will be appreciated that other options such as a preview option can also be provided for user previewing prior to sending the data.

Upon receipt of the data at the system server, a unique identification number or code is assigned to the data and the data is sent to a data server 32 connected to the system server 30 for storage in the data store 34 at step 110. The data is stored in the data store 34 in association with the unique identification code, for example, in a table in which the data is matched with the unique identification code.

Next a push link is generated at the system server 30, encrypted, digitally signed and sent to the computer 36 at step 112. The push link is created as an http link for requesting to send data in response to selection of the link. The user of the computer 36 the places the link on a Web page of a Web site hosted at the computer 36 at step 114. Thus, an http link is provided for selection by a third party for providing the data entered at step 106 and associated with the unique identification code at step 110.

The method of Figure 3 will now be described with reference to a specific example. In the present example, the user of the computer 36 wishes to prepare a Web page with content including contact information for a company, for example. Thus, in the present example, the computer 36 is a Web server for a company for providing http communication including data such as Web pages and links. A link is created for providing the contact information for the company to a portable electronic device. To create the link, the user of the computer 36 accesses the Web site hosted by the system server 30 at step 100 and the user is prompted to log in. The user enters a previously assigned user name and password and the user name and password is received at the system server 30 and matched to login information of authorized users. For the purpose of the present example, the user is an authorized user and thus, the user is logged in to the Web site at step 102 and provided further services.

After logging in, a Web page including a link is provided for user viewing via the Web browser. The link is selected by the user for creating a new link for pushing data to a portable electronic device, at step 104. In the present example, the user selects the link and is provided with a prompt to indicate the type of data to be provided. For exemplary purposes, the user selects an option to provide contact information for an address book at a portable electronic device. It will be appreciated that other options can be provided for pushing other data types to portable electronic devices. For example, options for providing a bookmarked Web address for a browser or information such as a location, for example, a location of a local restaurant, can be provided. Other options such as a task, a memo, a calendar event or a picture option can also be provided.

With the selection of one of the options, a page is loaded to assist the user with entry of data based on the selected option. In the present example, a page is loaded for entry of the fields of the contact at step 106, including for example, a contact name, an address, a telephone number, a fax number, an email address and any additional notes. The user enters the fields of data, as desired, and the entered data is sent to the system server 30 upon user selection of an option to send the data, at step 108. It will be appreciated that other options such as a preview option can also be provided for user previewing prior to sending the data.

Next a unique identification number or code is assigned to the contact data by the system server 30 and the contact data is sent to the data server 32 for storage in the data store 34 in association with the unique identification code at step 110.

The push link is then generated at the system server 30, encrypted and digitally signed. The push link includes the unique identification code, and is sent to the computer 36 at step 112. For example, a link such as http://www.portabledevice.com/pushtodevice.dll?uniqueID=1029482 can be provided. In this case, the unique identification code assigned to the data is 1029482. The user of the computer 36 then places the link on the desired Web page for portable electronic device users to access and select to have the contact sent to their portable electronic devices, at step 114. It will be appreciated that the link can be placed, for example, under contact information with a heading that indicates "Send to my Portable Electronic Device", or any other suitable identifier.

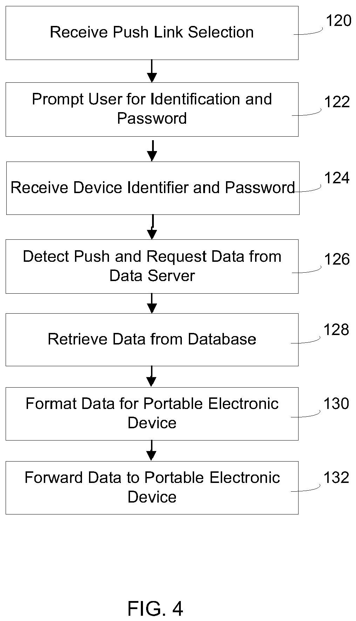

Reference is now made to Figure 4 to describe a method of transferring data to a portable electronic device. Coding of software for carrying out the steps illustrated in Figure 4 is well within the scope of a person of ordinary skill in the art. In the present embodiment, a computer 38 with a Web browser is used to access the Web page that includes the push link for transferring data to a portable electronic device. The computer 38 can be any computer device with a Web browser. A user of the computer 38 accesses the Web site hosted by the computer 36 and selects the http push link provided on the Web page to have data transferred to the user's portable electronic device at step 120. Upon selection of the push link, the user is prompted for a unique identifier for the portable electronic device 20 and a password or other suitable authentication at step 122. It will be appreciated that selection of the link sends an http request to the Web server which provides an http response in the form of a login requiring a unique portable electronic device identifier (an identifier that is unique to the user's portable electronic device 20) for the purpose of sending data and a password for authenticating the user requesting sending of the data. The portable electronic device identifier and the password are received at the system server 30 and compared to portable electronic device identifiers and corresponding passwords at the system server 30 to find a match for authorized users, at step 124. It will be appreciated that if the portable electronic device identifier and the password are not matched to that of an authorized user, the method does not proceed. For example, the user can be provided with a notification that the authentication failed along with a prompt to enter the information again. Alternatively, an error notification can be displayed.

After authentication by matching the portable electronic device identifier and password to an identifier and corresponding password for an authorized user, the system server 30 detects the push command by detecting receipt of the http post request for the unique identification code assigned to the data and the portable electronic device identifier, at step 126. The system server 30 then communicates with the data server 32 to process the request and the data server 32 retrieves the requested data by matching the unique identification code assigned to the data, with the data at step 128. Next, the data is formatted by the data server 32 into a form for processing by the portable electronic device 20 upon receipt, at step 130. The formatted data is then sent over the Internet 28, via the wireless gateway, network and infrastructure 26, to the portable electronic device 20 at step 132. Thus, the data is wirelessly transmitted to the portable electronic device 20.

The method of Figure 4 will now be described with reference to the specific example described above. For the purpose of the present example, the computer 38 is a public computer connected to the Internet via an internet service provider. It will be appreciated, however, that the computer 38 can be any suitable computer device with Internet access. The user of the computer 38 accesses the Web page that includes the http push link, using any suitable Web browser. The user wishes to have the contact information for the company contact added to the address book of the user's portable electronic device 20. Thus, the user selects the push link by, for example, clicking on the link provided on the Web page (step 120). In response, the user is prompted for an identification number for the portable electronic device 20 and a previously assigned password (step 122). For the purpose of the present example, the unique portable electronic device identifier is an identification number for the user's portable electronic device 20. The identification number and password are received at the system server 30 and compared to portable electronic device identifiers and corresponding passwords at the system server 30. In the present example, the user is an authorized user and the user correctly enters the unique identification number for the portable electronic device 20 and the password. Thus, the user is authenticated and the method proceeds to step 126.

After authentication, the Web server detects the push command by detecting receipt of the http post request for the unique identification code assigned to the data and the portable electronic device identifier, at step 126. For the purpose of the present example, the push command is of form <a href=http://www.portabledevice.com/pushtodevice.dll?uniquelD=1029482>. The system server 30 then communicates with the data server 32 to process the request and the data server 32 retrieves the requested data by matching the unique identification code assigned to the data (1029482), with the contact data at step 128. Next, the contact data is formatted by the data server 32 into a suitable form for processing and storing in the address book of the portable electronic device 20, at step 130. The formatted contact data is then sent from via wireless transmission to the portable electronic device 20 at step 132 where the contact is added to the address book database at the portable electronic device 20 for viewing using the address book application.

Reference is now made to Figure 3 to describe another example. Again, the user of the computer 36 wishes to prepare a Web page with content including contact information. A link is created for providing the contact information for the company to portable electronic devices by accessing the Web site hosted by the system server 30 at step 100. The user is prompted to log in. The user enters a previously assigned user name and password and the user name and password are received at the system server 30 and matched to login information of authorized users. For the purpose of the present example, the user is an authorized user and thus, the user is logged in to the Web site at step 102 and provided further services.

After logging in, a Web page including a link is provided for user viewing via the Web browser. The link is selected by the user for creating a new link for pushing data to a portable electronic device, at step 104. In the present example, the user selects the link and is provided with a prompt to indicate the type of data to be provided. For exemplary purposes, the user selects an option to provide contact information for an address book at a portable electronic device. Again, it will be appreciated that other options can be provided for pushing other data types to portable electronic devices.

The user is then prompted for entry of the fields of the contact at step 106, including for example, a contact name, an address, a telephone number, a fax number, an email address and any additional notes. The user enters each field of data and the entered data is sent to the system server 30 upon user selection of an option to send the data, at step 108.

Next, a push link is created at the system server 30, including the contact information sent to the system server 30. For example, a link such as http://www.portabledevice.com/pushtodevice.dll?Emailaddr=bjones@ped.com&workphon e=1-416-555-5555> can be provided. In this case, the contact information provided in response to the prompting for entry of fields of the contact at step 106 includes an email address of bjones@ped.com and a work phone number of 1-416-555-5555. The user of the computer 36 then places the link on the desired Web page for portable electronic device users to access and select to have the contact sent to their portable electronic devices. It will be appreciated that the link can be placed, for example, under contact information with a heading that indicates "Send to my Portable Electronic Device", or any other suitable identifier. According to the present example, the contact information entered at step 108 is not stored in a data store and no unique identification is assigned as in the first-described example. Instead, the link provided for placement on the Web page includes the contact information.

Continuing with the present example and referring now to Figure 4, the user of the computer 38 accesses the Web page that includes the http push link, using any suitable Web browser. The user wishes to have the contact information for the company contact added to the address book of the user's portable electronic device 20. Thus, the user selects the push link by using a mouse to click on the link provided on the Web page (step 120). In response, the user is prompted for an identification number for the portable electronic device 20 and a previously assigned password (step 122). Again, the identification number is a unique portable electronic device identifier for the user's portable electronic device 20. The identification number and password are received at the system server 30 and compared to portable electronic device identifiers and corresponding passwords at the system server 30. In the present example, the user correctly entered the unique identification number for the portable electronic device 20 and the password and therefore the user is authenticated and the method proceeds to step 126.

After authentication, the contact data is sent to the portable electronic device 20 via the system server 30 for storage in the address book database of the portable electronic device 20. Thus, the data is not stored in the data store and there is no matching of any unique identification.

While the embodiments described herein are directed to particular implementations of the electronic device and method of controlling the electronic device, it will be understood that modifications and variations to these embodiments are within the scope and sphere of the present application. For example, in the examples described above, the user of the computer 36 entered a user name and password prior to creating a link to be added to a Web page. It will be appreciated that this is not necessary, however and that any user can be permitted to create a link. The use of a user name and password provides a level of security by permitting only authorized persons to create links. Although not described above, it will be appreciated that an option can be provided for a user to preview the contents of a link prior to selecting to push the data to the user's portable electronic device. Further, the data can be encrypted.

The data for pushing to the portable electronic device is described as being a contact for an address book, a bookmarked Web address for a browser, a location, a task, a memo, a calendar event, and a picture. The data that is pushed using a single link is not limited to a single contact, Web address, location, task, memo, calendar event, or picture, however. Rather than a single data item, multiple data items can be grouped so that more than one data item is transferred to the portable electronic device. The grouping of data can be accomplished in many ways. For example, when creating the link, a "group" option can be provided for user selection at step 104. Thus, the group option can, for example, result in the user being provided with a further option to select the next type of data and a page can be loaded to assist the user with entry of data based on the selected option. Upon entry of the data in the page, the user can be provided with an option to select the next type of data and to indicate that the group of data is completed. Each item of the group can be provided with its' own unique identification and the final group can be given a unique identification that is related to the combination of all of the unique identifications for the individual data items. Thus, when a portable electronic device user selects the link, multiple data items are pushed to the portable electronic device.

In the above-described embodiments and examples, the data for pushing to the portable electronic device is entered by a user at step 106 by prompting the user for data input or by loading a page to assist the user with entry of data based on the selected option. It will be appreciated that other methods of data entry are possible. For example, data can be entered on to a page and sent to data entry personnel within a company or data can be entered by a phone call or electronic mail to data entry personnel within a company.

Many other modifications and variations may occur to those skilled in the art.

## Claims

1. A method in a system comprising a system server (30), a first computer (36) and a second computer (38), of pushing data to a portable electronic device (20), the system server (30), the first computer (36) and the second computer (38) being different from each other, the method comprising:
transmitting a first web-link from said system server to said first computer, said first web-link selectable for sending a request to create a second web-link;
receiving (104) a request to create a second web-link at said system server from said first computer, in response to a selection of said first web-link at said first computer (36);
in response to receiving said request to create a second web-link, said system server providing a prompt to said first computer for data to be pushed to said portable electronic device (20);
receiving (108), at said system server, input comprising said data from said first computer;
creating, at the system server, and transmitting (112) said second web-link from said system server to the first computer (36), the second web-link selectable for sending a request to push said data to said portable electronic device (20);
receiving (120), at said system server, a request from said second computer to push said data to said portable electronic device, in response to a selection of said second web-link at said second computer (38), said second computer having received said second web-link from said first computer; and thereafter:
in response to receiving said request to push said data, said system server providing a prompt (122) to said second computer for a unique portable electronic device identifier;
receiving (124) said unique portable electronic device identifier at said system server; and
pushing (132) said data from said system server to said portable electronic device (20).

2. The method according to claim 1, wherein transmitting said second web-link comprises transmitting a Hypertext Transfer Protocol 'HTTP' link.

3. The method according to claim 2, comprising generating, encrypting and digitally signing said HTTP link at said system server, in response to receipt of said request to create said second web-link, prior to said transmitting said HTTP link.

4. The method according to any preceding claim, further comprising, at said system server:
assigning a unique identification to said data;
storing (110) said data in a data store (34) in association with said unique identification, prior to transmitting said second web-link; and
wherein said transmitting said second web-link comprises transmitting said second web-link including said unique identification.

5. The method according to claim 4, wherein said storing said data comprises forwarding, by said system server, said data to a further server (32) for storage in said data store.

6. The method according to claim 5, comprising requesting, by said system server, said data from said further server in response to receipt of selection of said second web-link.

7. The method according to claim 6, comprising receiving, by said system server from said further server, said data formatted for said portable electronic device, prior to said transmitting said data.

8. The method according to claim 4, comprising retrieving, by said system server, said data from said data store prior to said transmitting said data.

9. The method according to claim 8, comprising formatting, by said system server, said data for said portable electronic device prior to said transmitting said data.

10. The method according to any one of the preceding claims, wherein providing a prompt (122) for a unique portable electronic device identifier (20) further comprises:
prompting (122) a user for a password; and
authenticating the user using the password and identification of said portable electronic device (20) prior to transmitting said data to said portable electronic device.

11. A system for pushing data to a portable electronic device, the system comprising:
a first and a second computer connected to a network; and
at least one system server connected to said network and operable to execute applications for causing said server to implement the steps of the method of any one of claims 1 to 10, the at least one system server, the first computer and the second computer being different from each other.

12. A computer program product for controlling a system server, said computer program product comprising a computer-readable medium having computer-readable code embodied therein for implementing in said system server, the steps of the method of any one of claims 1 to 10.

## Patentansprüche

1. Verfahren in einem System, das einen Systemserver (30), einen ersten Rechner (36) und einen zweiten Rechner (38) umfasst, zum Durchsetzen von Daten zu einem tragbaren elektronischen Gerät (20), wobei sich der Systemserver (30), der erste Rechner (36) und der zweite Rechner (38) voneinander unterscheiden, das Verfahren umfassend:
Übertragen eines ersten Weblinks vom Systemserver an den ersten Rechner, wobei der erste Weblink zum Senden einer Anforderung zum Erstellen eines zweiten Weblinks auswählbar ist;
Empfangen (104) einer Anforderung zum Erstellen eines zweiten Weblinks am Systemserver vom ersten Rechner in Reaktion auf eine Auswahl des ersten Weblinks am ersten Rechner (36) ;
wobei der Systemserver in Reaktion auf die Anforderung zum Erstellen eines zweiten Weblinks dem ersten Rechner eine Aufforderung zuführt, Daten zum tragbaren elektronischen Gerät (20) durchzusetzen;
Empfangen (108), am Systemserver, einer Eingabe, die die Daten vom ersten Rechner umfasst;
Erstellen, am Systemserver, des zweiten Weblinks und Übertragen desselben vom Systemserver an den ersten Rechner (36), wobei der zweite Weblink zum Senden einer Anforderung zum Durchsetzen der Daten zum tragbaren elektronischen Gerät (20) auswählbar ist;
Empfangen (120), am Systemserver, einer Anforderung vom zweiten Rechner zum Durchsetzen der Daten zum tragbaren elektronischen Gerät in Reaktion auf eine Auswahl des zweiten Weblinks am zweiten Rechner (38),
wobei der zweite Rechner den zweiten Weblink vom ersten Rechner empfangen hat; und wobei danach:
der Systemserver, in Reaktion auf das Empfangen der Anforderung zum Durchsetzen der Daten, dem zweiten Rechner eine Aufforderung (122) hinsichtlich einer eindeutigen Kennung des tragbaren elektronischen Geräts zuführt;
Empfangen (124) der eindeutigen Kennung des tragbaren elektronischen Geräts am Systemserver; und
Durchsetzen (132) der Daten vom Systemserver zum tragbaren elektronischen Gerät (20).

2. Verfahren nach Anspruch 1, wobei das Übertragen des zweiten Weblinks das Übertragen eines Hypertext Transfer Protocol-, "HTTP"-, Links umfasst.

3. Verfahren nach Anspruch 2, umfassend das Erstellen, Verschlüsseln und digitale Signieren des HTTP-Links am Systemserver in Reaktion auf die Anforderung zum Erstellen des zweiten Weblinks, vor dem Übertragen des HTTP-Links.

4. Verfahren nach einem der vorhergehenden Ansprüche, ferner umfassend, am Systemserver:
Zuordnen einer eindeutigen Kennung zu den Daten;
Speichern (110) der Daten in einem Datenspeicher in Verbindung mit der eindeutigen Kennung, vor dem Übertragen des zweiten Weblinks; und
wobei das Übertragen des zweiten Weblinks das Übertragen des zweiten Weblinks mit der eindeutigen Kennung umfasst.

5. Verfahren nach Anspruch 4, wobei das Speichern der Daten das Weiterleiten, durch den Systemserver, der Daten an einen weiteren Server (32) zur Speicherung im Datenspeicher umfasst.

6. Verfahren nach Anspruch 5, umfassend das Anfordern, durch den Systemserver, der Daten vom weiteren Server in Reaktion auf den Empfang einer Auswahl des zweiten Weblinks.

7. Verfahren nach Anspruch 6, umfassend das Empfangen, durch den Systemserver vom weiteren Server, der Daten, die für das tragbare elektronische Gerät formatiert werden, vor dem Übertragen der Daten.

8. Verfahren nach Anspruch 4, umfassend das Abrufen, durch den Systemserver, der Daten aus dem Datenspeicher vor dem Übertragen der Daten.

9. Verfahren nach Anspruch 8, umfassend das Formatieren, durch den Systemserver, der Daten für das tragbare elektronische Gerät vor dem Übertragen der Daten.

10. Verfahren nach einem der vorhergehenden Ansprüche, wobei das Zuführen einer Aufforderung (122) hinsichtlich einer eindeutigen Kennung des tragbaren elektronischen Geräts (20) ferner umfasst:
Auffordern (122) eines Benutzers hinsichtlich eines Passworts; und
Authentifizieren des Benutzers, der das Passwort benutzt, und der Identifikation des tragbaren elektronischen Geräts (20) vor dem Übertragen der Daten an das tragbare elektronische Gerät.

11. System zum Durchsetzen von Daten zu einem tragbaren elektronischen Gerät, das System umfassend:
einen ersten und einen zweiten Rechner, die mit einem Netzwerk verbunden sind; und
zumindest einen Systemserver, der mit dem Netzwerk verbunden ist und zum Ausführen von Anwendungen zum Bewirken, dass der Server die Schritte des Verfahrens nach einem der Ansprüche 1 bis 10 implementiert, betriebsfähig ist, wobei sich der zumindest eine Systemserver, der erste Rechner und der zweite Rechner voneinander unterscheiden.

12. Computerprogrammprodukt zum Steuern eines Systemservers, wobei das Computerprogrammprodukt ein maschinenlesbares Medium mit darin verkörpertem maschinenlesbarem Code zum Implementieren, im Systemserver, der Schritte des Verfahrens nach einem der Ansprüche 1 bis 10 umfasst.

## Revendications

1. Procédé, dans un système comprenant un serveur de système (30), un premier ordinateur (36) et un deuxième ordinateur (38), de poussée de données vers un dispositif électronique portable (20), le serveur de système (30), le premier ordinateur (36) et le deuxième ordinateur (38) étant différents les uns des autres, le procédé comprenant le fait :
de transmettre un premier lien Web à partir dudit serveur de système audit premier ordinateur, ledit premier lien Web pouvant être sélectionné pour envoyer une requête de création d'un deuxième lien Web ;
de recevoir (104) une requête de création d'un deuxième lien Web au niveau dudit serveur de système à partir dudit premier ordinateur, en réponse à une sélection dudit premier lien Web au niveau dudit premier ordinateur (36) ;
de fournir, par le biais dudit serveur de système, en réponse à la réception de ladite requête de création d'un deuxième lien Web, une demande, audit premier ordinateur, de données à pousser vers ledit dispositif électronique portable (20) ;
de recevoir (108), au niveau dudit serveur de système, une entrée comprenant lesdites données à partir dudit premier ordinateur ;
de créer, au niveau du serveur de système, et de transmettre (112) ledit deuxième lien Web à partir dudit serveur de système au premier ordinateur (36), le deuxième lien Web pouvant être sélectionné pour envoyer une requête de poussée desdites données vers ledit dispositif électronique portable (20) ;
de recevoir (120), au niveau dudit serveur de système, une requête à partir dudit deuxième ordinateur pour pousser lesdites données vers ledit dispositif électronique portable, en réponse à une sélection dudit deuxième lien Web au niveau dudit deuxième ordinateur (38), ledit deuxième ordinateur ayant reçu ledit deuxième lien Web à partir dudit premier ordinateur ; et ensuite :
de fournir, par le biais dudit serveur de système, en réponse à la réception de ladite requête de poussée desdites données, une demande (122), audit deuxième ordinateur, d'un identifiant de dispositif électronique portable unique ;
de recevoir (124) ledit identifiant de dispositif électronique portable unique au niveau dudit serveur de système ; et
de pousser (132) lesdites données à partir dudit serveur de système vers ledit dispositif électronique portable (20).

2. Procédé selon la revendication 1, dans lequel la transmission dudit deuxième lien Web comprend la transmission d'un lien de Protocole de Transfert Hypertexte 'HTTP'.

3. Procédé selon la revendication 2, comprenant la génération, le cryptage et la signature numérique dudit lien HTTP au niveau dudit serveur de système, en réponse à la réception de ladite requête de création dudit deuxième lien Web, avant ladite transmission dudit lien HTTP.

4. Procédé selon l'une des revendications précédentes, comprenant en outre, au niveau dudit serveur de système, le fait :
d'attribuer une identification unique auxdites données ;
de stocker (110) lesdites données dans un magasin de données (34) en association avec ladite identification unique, avant de transmettre ledit deuxième lien Web ; et
dans lequel ladite transmission dudit deuxième lien Web comprend la transmission dudit deuxième lien Web qui comporte ladite identification unique.

5. Procédé selon la revendication 4, dans lequel ledit stockage desdites données comprend le transfert, par ledit serveur de système, desdites données à un serveur supplémentaire (32) pour le stockage dans ledit magasin de données.

6. Procédé selon la revendication 5, comprenant le fait de formuler une requête, par ledit serveur de système, desdites données provenant dudit serveur supplémentaire en réponse à la réception de la sélection dudit deuxième lien Web.

7. Procédé selon la revendication 6, comprenant la réception, par ledit serveur de système à partir dudit serveur supplémentaire, desdites données formatées pour ledit dispositif électronique portable, avant ladite transmission desdites données.

8. Procédé selon la revendication 4, comprenant la récupération, par ledit serveur de système, desdites données à partir dudit magasin de données avant ladite transmission desdites données.

9. Procédé selon la revendication 8, comprenant le formatage, par ledit serveur de système, desdites données pour ledit dispositif électronique portable avant ladite transmission desdites données.

10. Procédé selon l'une quelconque des revendications précédentes, dans lequel la fourniture d'une demande (122) d'un identifiant de dispositif électronique portable unique (20) comprend en outre le fait :
de demander (122), à un utilisateur, un mot de passe ; et
d'authentifier l'utilisateur en utilisant le mot de passe et l'identification dudit dispositif électronique portable (20) avant de transmettre lesdites données audit dispositif électronique portable.

11. Système pour pousser des données vers un dispositif électronique portable, le système comprenant :
des premier et deuxième ordinateurs connectés à un réseau ; et
au moins un serveur de système connecté audit réseau et pouvant fonctionner pour exécuter des applications pour amener ledit serveur à mettre en oeuvre les étapes du procédé de l'une quelconque des revendications 1 à 10, l'au moins un serveur de système, le premier ordinateur et le deuxième ordinateur étant différents les uns des autres.

12. Produit de programme informatique pour commander un serveur de système, ledit produit de programme informatique comprenant un support lisible par ordinateur ayant un code lisible par ordinateur incorporé dans celui-ci pour mettre en oeuvre, dans ledit serveur de système, les étapes du procédé de l'une quelconque des revendications 1 à 10.
